# EUROPEAN PATENT SPECIFICATION

(11) **EP 1 469 994 B1**
(45) Date of publication and mention of the grant of the patent: **05.09.2012**
(21) Application number: 03734744.0
(22) Date of filing: 17.01.2003
(51) Int. Cl.: B32B 27/12, B63B 3/00

(54) **IMPROVED STRUCTURAL SANDWICH PLATE MEMBERS**
VERBESSERTE STRUKTURELLE VERBUNDPLATTENGLIEDER
ELEMENTS A PLAQUES SANDWICHS STRUCTURELS AMELIORES

(30) Priority: 28.01.2002 GB 0201903
(43) Date of publication of application: 27.10.2004
(73) Proprietor: Intelligent Engineering (Bahamas) Limited, Nassau (BS)
(72) Inventor: KENNEDY, Stephen, John, Ottawa, Ontario K1Y ON2 (CA)
(74) Representative: Leeming, John Gerard
(86) International application number: PCT/GB2003/000225
(87) International publication number: WO 2003/064154

(56) References cited:
- WO-A-99/58333
- GB-A- 2 000 725
- US-A- 5 225 812

## Description

The present invention relates to structural sandwich plate members, which plate members comprise outer plates bonded together by a core layer of plastics or polymer material which transfers shear forces therebetween, and to structures formed by connecting together structural sandwich plate members.

Structural sandwich plate members, known commercially as SPS™, are described in US Patent 5,778,813, British Patent Application GB-A-2 337 022 and International Application No. GB00/04198 which documents are incorporated herein by reference. Such structural sandwich plate members comprise outer metal plates bonded together by a plastics or polymer core with sufficient strength to transfer shear forces therebetween. The plastics or polymer core may be solid and continuous, occupying the entire volume between the outer metal plates, or may be interrupted by, e.g. foam, forms which leave continuous plastics or polymer connections between the outer metal plates. A principal use of these structural sandwich plate members is to replace stiffened steel structures, e.g. in maritime, offshore and civil engineering applications. In such applications, the structural sandwich plate members enable the elimination of some or all stiffening elements providing a simpler structure that is easier to construct and maintain. In particular, the amount of welding necessary is generally substantially reduced as compared to a conventional stiffened steel structure.

A further advantage of such structural sandwich plate members is that they can be prefabricated, either as individual plate members or as more complex modules to be assembled into the eventual structure. Pre-fabricated modules can be made under factory conditions to greater accuracy than traditional structures can be assembled on site and further ease construction.

US 5,225,812 describes a protective composite liner for insulation inside a vessel such as a supertanker. The liner has three layers, an outer layer of high strength fibres, a middle layer of flexible, high strength resilient film material and an chemical resistance layer.

GB 2,000,725 A describes a sandwich structure with a core of foamed plastic enclosed between surface layers of a hardware resistant material, such as metal plastics or plywood.

Although such structural sandwich plate members have considerable technical and economic advantages over traditional stiffened steel structures, their weight is comparable to or moderately less than that of traditional stiffened steel structures and a considerable amount of steel or metal is still present, which can be undesirable in some applications.

It is an aim of the present invention to provide alternative forms of structural sandwich plate members, preferably with lower weight than those made with all metal face plates and other improved properties.

According to the present invention, there is provided a structural sandwich plate member as defined in the appended claims.

A structural sandwich member with one non-metal face plate can provide improved chemical resistance and is advantageous for use in forming storage tanks, with the non-metal face plate on the inside. If both face plates are made of non-metal material, a metal free structure, having reduced electromagnetic signature can be made.

The non-metal face plates are preferably made of a fibre-reinforced polymer material such as carbon-fibre reinforced polymer material. The strengths and like properties of such composite materials are often specified as a ratio whereby the value of the property in other units is divided by the density of the material. In the invention, the strength ratio of the face plates (tensile strength/density) is in the range of from 0.1 to 0.25 (MPa/kgm⁻³). Similarly, the stiffness ratio (modulus of elasticity/density) is in the range of from 2 to 26 (MPa/kgm⁻³).

The structural sandwich plate members according to the invention are particularly advantageous for use in applications where extremely low weight is required or steel and other metals are undesirable. For example, the structural sandwich plate members according to the invention may be used in mine sweepers and other specialist military vessels for which a low electromagnetic signature or a reduction in ship/structure borne noise is desirable. Civil engineering applications for the invention include bridge deck panels and chemical tanks. For bridge deck panels, the weight savings can provide a substantial reduction in the cost of the superstructure supporting the deck and the non-metal face plates provide a structure that is resistant to corrosive road salts. For chemical storage tanks, one or both face plates can be made of a material chosen to resist chemical attack from the stored chemical.

The present invention also provides structures comprising at least one structural sandwich plate member as described above.

Further, the present invention provides a method of manufacturing a component of a structure as defined in the appended claims.

Yet further, the present invention provides a method of reinforcing an existing metal structure as defined in the appended claims.

This method can be used for the repair or rehabilitation of an existing metal, e.g steel, structure that has deteriorated due to age, corrosion or wear. The reinforcing layer reinstates the structural capacity of the existing structure and inhibits further deterioration. The light weight reinforcing layer may be shaped or formed off-site or in-side to fit the shape of the existing structure, including any reinforcing elements. The reinforcing layer may be made of, or include, a layer of ceramic material to provide enhanced fire resistance. The method of the present invention can be applied simply in confined or dangerous areas, e.g. the interior of storage tanks, using prefabricated sections to avoid hot work on site.

The present invention will be further described below with reference to the following description of exemplary embodiments and the accompanying drawings, in which:
Figure 1 is a cross-sectional view of a structural sandwich plate member according to a first embodiment of the present invention;
Figure 2 is cross-sectional view of a structural sandwich plate member according to a second embodiment of the present invention;
Figure 3 is a cross-sectional view illustrating a method of joining two structural sandwich plate members according to the invention; and
Figure 4 is a cross-sectional view of a structural sandwich plate member according to a third embodiment of the invention;
Figure 5 is a partly sectional perspective view of a structure reinforced using a method according to a fourth embodiment;
Figure 6 is a cross-sectional view of the structure of Figure 5;
Figure 7 is a cross-sectional view of the structure of Figure 6 along line A-A.
In the drawings, like parts are indicated by like references.

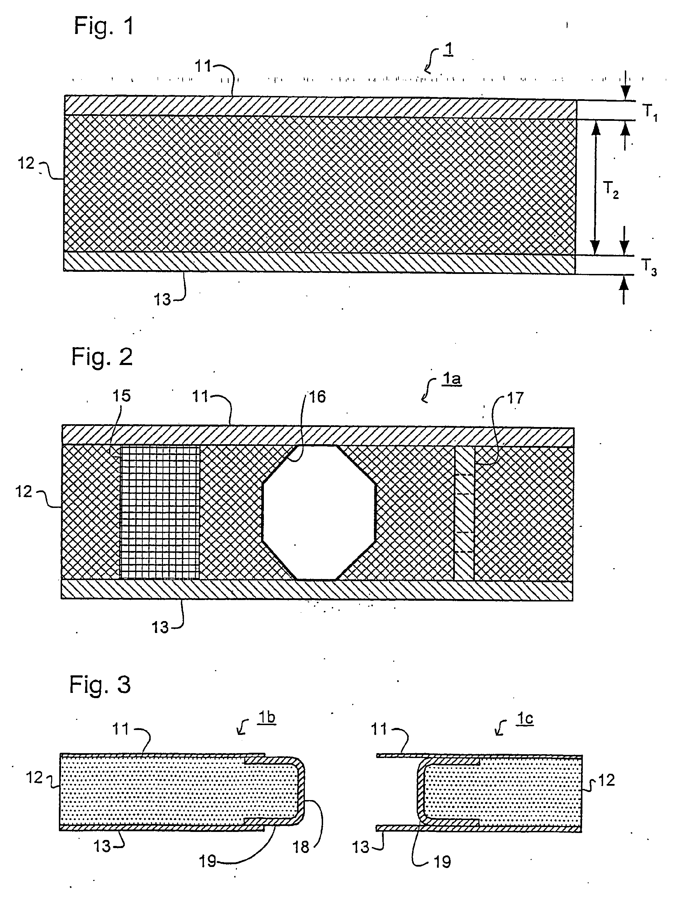

Figure 1 shows in cross-section a structural sandwich plate member 1 according to a first embodiment of the present invention.

The structural sandwich plate member 1 comprises outer face plates 11 and 13 which are bonded together by core 12. The face plates 11, 13 are made of a carbon fibre reinforced plastics material whilst the core 12 is made of compact thermosetting polyurethane. The core 12 is compact, i.e. not foamed The core 12 is integrally bonded to the face plates 11,13 providing continuous support and sufficient shear and bond strength to transmit the expected shear loads between them. The thicknesses of the sandwich elements 11,12,13 are shear loads between them. The thicknesses of the sandwich elements 11,12,13 are selected to provide the flexural and in-plane strength and stiffness of the sandwich plate for the particular static and dynamic requirements

The strength and stiffness ratios for the non-metal reinforced composite plates are expressed as the ratio of the tensile strength divided by the mass density; and the ratio of the modulus of elasticity divided by the mass density and are in the range of 0.03 to 0.95, preferably 0.1 to 0.25 (MPa/kgm⁻³); and 0.5 to 50, preferably 2 to 26 (MPalkgm⁻³) respectively, for use in maritime, offshore and civil engineering structures. It will be appreciated that the dimensions of the member will vary according to application but for practical maritime and civil engineering applications the face plates may have thicknesses T₁, T₃ in the range of from 1 to 30mm and the core a thickness T₂ in the range of from 10mm to 150mm. The thicknesses of the two face plates may be different and may vary across their area. Similarly, the thickness of the core may vary across the area of the plate member. Although the plate member 1 is shown in Fig. 1 as being flat it may be curved or have a more complex contour as desired for a specific application.

In a second embodiment of the invention, a structural sandwich plate member la shown in cross section in Fig. 2 may be provided with additional elements embedded in the core 12 to reduce weight or increase strength. Otherwise, the structural sandwich plate member of the second embodiment is the same as that of the first embodiment. For example, Fig. 2 shows a solid foam form 15 which has a lower density than the material of the core 12 and so reduces weight of the structural sandwich plate member. Alternatively, hollow form 16 may be used for the same purpose; such forms may comprise elongate extruded plastic pipes or prefabricated hollow foam forms and may have other profiles than as illustrated in Fig. 2. The hollow form 16 may be manufactured as a wide raft or in sections that connect together to form such rafts. The foam forms 15 and hollow forms 16 are positioned within the core so that continuous paths of the core material 12 connect the face plates 11, 13 together. Preferably, the foam or hollow forms 15, 16 leave continuous elastomer ribs extending between the face plates 11, 13. Solid or hollow foam or hollow forms may be layered, aligned, placed orthogonally or at any preferred orientation with respect to one another to maximise structural performance.

To increase the strength of the element, transverse shear plates 17 extending between the face plates 11, 13 may also be provided. Such shear plates are preferably perforated to improve bonding between the core 12 and the shear plates 17. The shear plates 17 assist in transfer of shear forces between face plates 11, 13.

To manufacture the structural sandwich plate member according to the invention, the face plates 11, 13 are placed in a spaced apart relationship, either in a mould or with edge members (not shown) spanning between them, to form a closed cavity. The cavity is then injected with material to form the core 12. Of course, internal elements such as those shown in Fig. 2 are placed in the mould prior to closing or on one of the face plates before the edge members are attached to form the closed cavity. The core material when setting acts to bond together the face plates to form a composite structural unit. The required bond is preferably formed through the natural adhesiveness between the core material and the face plates 11, 13 but, if desired, additional adhesives or surface preparations of the face plates 11, 13 or internal (wire) mesh placed parallel to the interior plate surfaces may be employed.

As shown in Fig. 3, to form complex structures, structural sandwich plate members 1b, 1c may be joined by providing a prefabricated edge member 19 on one structural sandwich plate member 16 that projects and a similar edge member 19 on the other that is recessed so that the two structural sandwich plate members interlock. A layer of suitable adhesive 18 is provided between the mating parts.

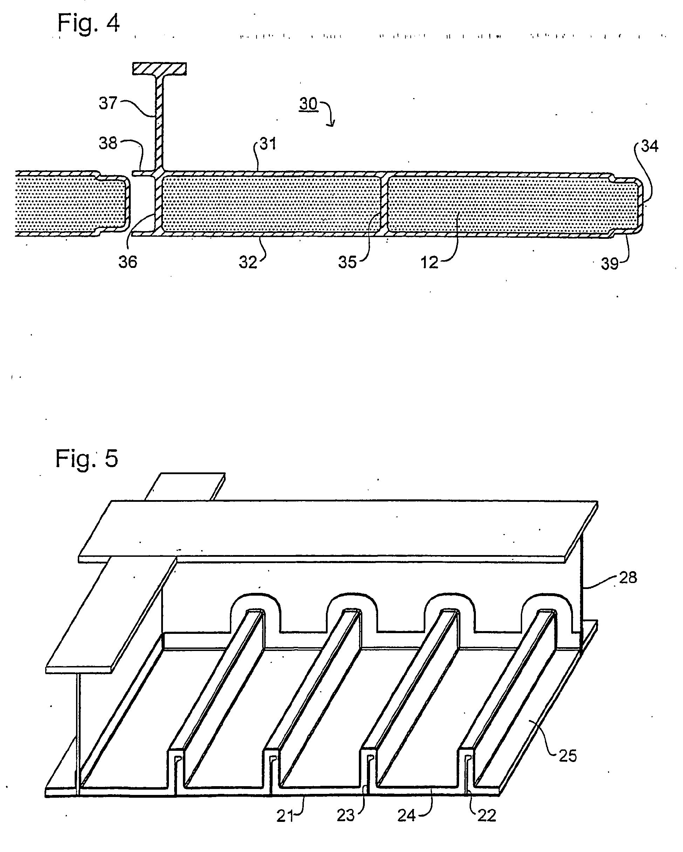

Figure 4 shows a structural sandwich plate member 30 according to a third embodiment of the invention. In this embodiment, the complete outer shell is pultruded as an integral form, including additional details.

As seen in Figure 4, the outer shell of the structural sandwich plate member 30 comprises face plates 31,32, end walls 34,36 and an internal stiffening rib 35. Aligned with end wall 36, an external stiffening girder 37 is provided. To facilitate connections between members 30, one end has a portion of reduced thickness 39 forming a male member that mates with a socket defined by flanges 38 on the other end. To complete the bond, adhesive is provided in the mating surfaces.

The members 30 are prefabricated off-site in long lengths, then cut as necessary and shipped to the construction site. On-site they are assembled into the desired structure, which may involve further trimming, and once in place, plastics or polymer is injected to form the core 12. In this way, dimensional accuracy can be assured by off-site manufacture and handling is facilitated on-site because the members are very light and easy to cut before the core 12 is injected. When the core is injected, the members achieve full structural strength.

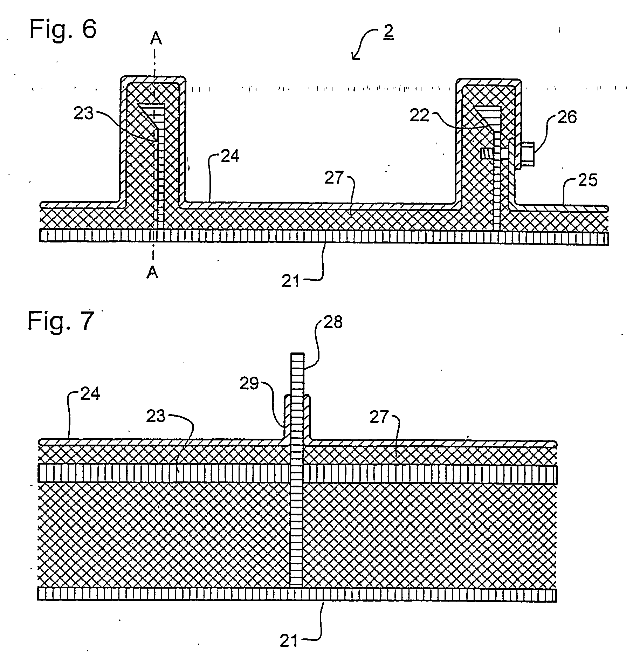

Figures 5, 6, and 7 show a fourth embodiment of the present invention in which overlay 2 is added to repair an existing metal structure.

In Figures 5, 6 and 7, the bottom plate of a transfer or storage tanker is shown at 21 and is reinforced by bulb flats 22,23 and girders 28. Such bottom plates often become pitted overtime, necessitating repair or replacement. This has conventionally been done by cutting out the corroded plate section or reinforcement and welding in a replacement or adding additional plating over the corroded part. Where the tank or tanker has been used to store inflammable products, it is essential to flush out all residual vapours from the compartment in which such hot work is to be done, and also all neighbouring compartments. This is time consuming and expensive.

According to the invention, a reinforcing layer 24,25 is positioned in a spaced apart relationship to the plate to be repaired, in this case bottom plate 21. Spaces, such as elastomer stubs, may be used to ensure the desired spacing. The reinforcing layer is made of a reinforced composite or reinforced polymer material as in the previous embodiments. It may be provided in prefabricated sections of standard forms, or continual sections for a specific job, which are fitted around the reinforcing elements 22, 23, 28. In the present example, the bulb flats 22, 23, are enclosed by the reinforcing layer but the girders 28 project through. Sections 24,25 of the reinforcing layer make rolled lap joints to the girder 28. Where necessary, the sections can be cut to size with a jig-saw and can be joined by suitable adhesive or by bolting 26 to a bulb flat.

Once the reinforcing layer 24, 25, has been completed, plastics or polymer material is injected into the casing between reinforcing layer 24,25 and plate 21 and cured to form core layer 27. The core layer 27 bonds the reinforcing layer and plate 21 together with sufficient strength to transfer shear forces expected in use and thus forms a composite structural whole.

With this invention, no significant heat is generated during the repair process so that only the compartment being worked in, and not neighbouring compartments, needs to be flushed of flammable vapours.

The method can also be applied to pipelines using moulded or pultruded overlay sections with snap interlocking longitudinal seams and prefabricated ring perimeter sections.

Whilst embodiments of the present invention and possible uses for them have been described, it will be appreciated that the connecting member of the present invention may be constructed differently than as described and may be used in other ways, as will occur to the skilled reader. The present invention is not to be limited save within the scope of the appended claims.

## Claims

1. A structural sandwich plate member, comprising first and second face plates (11, 13), at least one of said face plates (11, 13) is formed of a non-metal reinforced composite or reinforced polymer material, and a plastics or polymer core (12) bonding said face plates together with sufficient strength to transfer shear forces therebetween, **characterised in that**:
said face plates have strength ratios in the range of 0.03 to 0.5 MPa/kgm⁻³ and stiffness ratios in the range of 0.5 to 50 MPa/kgm⁻³ and
said core (12) is formed of compact thermosetting polyurethane material.

2. A member according to claim 1 wherein said reinforced composite material is a fibre-reinforced polymer material.

3. A member according to claim 2 wherein said polymer material is reinforced with carbon fibre.

4. A member according to any one of the preceding claims wherein said face plates (11, 12) have strength ratios in the range of from 0.1 to 0.25 MPa/kgm⁻³.

5. A member according to any one of those preceding claims wherein said face plates (11, 12) have stiffness ratios in the range of from 2 to 26 MPa/kgm⁻³.

6. A member according to any one of the preceding claims wherein said face plates (11, 13) have thicknesses in the range of from 1 to 30mm.

7. A member according to any one of the preceding claims wherein said core (12) has a thickness in the range of from 10mm to 150mm.

8. A member according to any one of the preceding claims wherein said face plates (11, 13) and side walls (34, 36) spanning between said face plates are pultruded as a single unit.

9. A maritime structure, ship or boat having a hull constructed from at least one structural sandwich plate member according to any one of the preceding claims.

10. A bridge deck panel comprising at least one structural sandwich plate member according to any one of claims 1 to 8.

11. A storage tank comprising at least one structural sandwich plate member according to any one of claims 1 to 8.

12. A method of manufacturing a component of a structure comprising the steps of:
providing first and second face plates (11, 13) in a spaced apart relationship to define a cavity, said first and second face plates being formed of a non-metal reinforced composite material; and
injecting plastics or polymer material (12) into said cavity to bond said first and second face plates together with sufficient strength to transfer shear forces therebetween; wherein
said face plates have strength ratios in the range of 0.03 to 0.5 Pa/kgm⁻³ and stiffness ratios in the range of 0.5 to 50 MPa/kgm⁻³ and
said core (12) is formed of compact thermosetting polyurethane material.

13. A method of building a structure comprising the steps of:
manufacturing a plurality of structural components according to the method of claim 12; and
assembling said structural components to form said structure.

14. A method according to claim 13 wherein said steps of manufacturing and assembling are carried out at different sites.

15. A method of reinforcing an existing metal structure (21) comprising the steps of :
providing a reinforcing layer (24) on said metal structure (21) in spaced apart relation to thereby form at least one cavity between inner surfaces of said metal structure and said reinforcing layer;
injecting material into said at least one cavity to form an intermediate layer (27) of compact polyurethane; and
curing said material so that it adheres to said inner surfaces of said metal structure (21) and said reinforcing layer (24) so as to transfer shear forces therebetween; **characterised in that**:
said reinforcing layer is formed of a non-metal reinforced composite or reinforced polymer material having a strength ratio in the range of from 0.03 to 0.5 Mpa/kgm⁻³ and a stiffness ratio in the range of from 0.5 to 50 Mpa/kgm⁻³.

16. A method according to claim 15, wherein said existing metal structure is a metal panel (21) that is supported by beams, girders or bulb flats (22, 23) and said, reinforcing layer is arranged such that at least some of said beams, girders or bulb flats are positioned between said metal panel and said reinforcing layer.

17. A method according to claim 16, wherein said reinforcing layer is bent such that said reinforcing layer (24) is further from said metal panel in the proximity of said beams or bulb flats than in other positions.

18. A method according to claim 15, 16 or 17 wherein said existing metal structure is a metal panel reinforced by at least one girder (28), wherein reinforcing layer (24) is provided so that an edge thereof is jointed to said girder by a rolled lap joint (29).

19. A method according to any one claims 12 to 18 wherein said structure is a building, a bridge, a ship, a ship component or an off-shore structure.

## Patentansprüche

1. Strukturelles Verbundplattenelement mit ersten und zweiten Stirnplatten (11, 13), wobei mindestens eine der Stirnplatten (11, 13) aus einem nichtmetallischen verstärkten Verbundmaterial oder verstärktem Polymermaterial gebildet ist, und einem Kunststoff- oder Polymerkern (12), der die Stirnplatten mit ausreichender Festigkeit miteinander verbindet, um dazwischen Scherkräfte zu übertragen, **dadurch gekennzeichnet, dass**:
die Stirnplatten Festigkeitsverhältnisse in dem Bereich von 0,03 bis 0,5 MPa/kgm⁻³ und Steifigkeitsverhältnisse in dem Bereich von 0,5 bis 50 MPa/kgm⁻³ aufweisen und
der Kern (12) aus kompaktem wärmehärtenden Polyurethanmaterial gebildet ist.

2. Element nach Anspruch 1, wobei das verstärkte Verbundmaterial ein faserverstärktes Polymermaterial ist.

3. Element nach Anspruch 2, wobei das Polymermaterial mit Kohlefaser verstärkt ist.

4. Element nach einem der vorhergehenden Ansprüche, wobei die Stirnplatten (11, 12) Festigkeitsverhältnisse in dem Bereich von 0,1 bis 0,25 MPa/kgm⁻³ aufweisen.

5. Element nach einem der vorhergehenden Ansprüche, wobei die Stirnplatten (11, 12) Steifigkeitsverhältnisse in dem Bereich von 2 bis 26 MPa/kgm⁻³ aufweisen.

6. Element nach einem der vorhergehenden Ansprüche, wobei die Stirnplatten (11, 13) Dicken in dem Bereich von 1 bis 30 mm aufweisen.

7. Element nach einem der vorhergehenden Ansprüche, wobei der Kern (12) eine Dicke in dem Bereich von 10 mm bis 150 mm aufweist.

8. Element nach einem der vorhergehenden Ansprüche, wobei die Stirnplatten (11, 13) und Seitenwände (34, 36), die sich zwischen den Stirnplatten aufspannen, als eine Einheit vorstehen.

9. Maritime Struktur, Schiff oder Boot mit einem Rumpf, der aus mindestens einem strukturellen Verbundplattenelement nach einem der vorhergehenden Ansprüche konstruiert ist.

10. Brückendeckplanke mit mindestens einem strukturellen Verbundplattenelement nach einem der Ansprüche 1 bis 8.

11. Speichertank mit mindestens einem strukturellen Verbundplattenelement nach einem der Ansprüche 1 bis 8.

12. Verfahren zum Herstellen einer Komponente einer Struktur, welches folgende Schritte umfasst:
Vorsehen erster und zweiter Stirnplatten (11, 13) in einer beabstandeten Beziehung, um einen Hohlraum auszubilden, wobei die ersten und zweiten Stirnplatten aus einem nichtmetallischen verstärkten Verbundmaterial gebildet sind; und
Einspritzen von Kunststoff oder Polymermaterial (12) in den Hohlraum, um die ersten und zweiten Stirnplatten mit ausreichender Festigkeit miteinander zu verbinden, um dazwischen Scherkräfte zu übertragen; wobei
die Stirnplatten Festigkeitsverhältnisse in dem Bereich von 0,03 bis 0,5 MPa/kgm-³ und Steifigkeitsverhältnisse in dem Bereich von 0,5 bis 50 MPa/kgm⁻³ aufweisen und
der Kern (12) aus kompaktem wärmehärtenden Polyurethanmaterial gebildet ist.

13. Verfahren zum Bauen einer Struktur, welches die folgenden Schritte umfasst:
Herstellen von mehreren strukturellen Komponenten nach dem Verfahren von Anspruch 12; und
Zusammenbauen der strukturellen Komponenten, um die Struktur zu bilden.

14. Verfahren nach Anspruch 13, wobei die Schritte des Herstellens und Zusammenbauens an verschiedenen Orten ausgeführt werden.

15. Verfahren zum Verstärken einer vorhandenen Metallstruktur (21), welches die folgenden Schritte umfasst:
Vorsehen einer verstärkenden Schicht (24) auf der Metallstruktur (21) in beabstandeter Beziehung, um dadurch mindestens einen Hohlraum zwischen Innenflächen der Metallstruktur und der verstärkenden Schicht zu bilden;
Einspritzen von Material in den mindestens einen Hohlraum, um eine Zwischenschicht (27) aus kompaktem Polyurethan zu bilden; und
Aushärten des Materials, so dass es an den Innenflächen der Metallstruktur (21) und der verstärkenden Schicht (24) anhaftet, um dazwischen Scherkräfte zu übertragen; **dadurch gekennzeichnet, dass**:
die verstärkende Schicht aus einem nichtmetallischen verstärkten Verbundmaterial oder verstärktem Polymermaterial mit einem Festigkeitsverhältnis in dem Bereich von 0,03 bis 0,5 MPa/kgm⁻³ und einem Steifigkeitsverhältnis in dem Bereich von 0,5 bis 50 MPa/kgm-³ gebildet ist.

16. Verfahren nach Anspruch 15, wobei die vorhandene Metallstruktur eine Metallplanke (21) ist, die von Tragbalken, Trägern oder Wulstflachstählen (22, 23) gelagert ist, und die verstärkende Schicht so angeordnet ist, dass mindestens einige der Tragbalken, Träger oder Wulstflachstähle zwischen der Metallplanke und der verstärkenden Schicht positioniert sind.

17. Verfahren nach Anspruch 16, wobei die verstärkende Schicht so gebogen ist, dass die verstärkende Schicht (24) in der Nähe der Tragbalken oder Wulstflachstähle weiter von der Metallplanke weg als in anderen Positionen ist.

18. Verfahren nach Anspruch 15, 16 oder 17, wobei die vorhandene Metallstruktur eine durch mindestens einen Träger (28) verstärkte Metallplanke ist, wobei die verstärkende Schicht (24) so vorgesehen ist, dass ein Rand derselben durch eine gerollte Überlappverbindung (29) mit dem Träger verbunden ist.

19. Verfahren nach einem der Ansprüche 12 bis 18, wobei die Struktur ein Gebäude, eine Brücke, ein Schiff, eine Schiffkomponente oder eine vor der Küste liegende Struktur ist.

## Revendications

1. Élément structurel de type plaque sandwich comprenant des première et deuxième plaques de face (11, 13), au moins l'une desdites plaques de face (11, 13) est formée d'un matériau composite renforcé non métallique ou polymère renforcé, et une âme en plastique ou polymère (12) liant lesdites plaques de face entre elles avec une résistance suffisante pour transférer les forces de cisaillement entre elles, **caractérisé en ce que** :
lesdites plaques de face ont des rapports de résistances compris dans l'intervalle de 0,03 à 0,5 MPa/kgm⁻³ et des rapports de rigidité compris dans l'intervalle de 0,5 à 50 MPa/kgm⁻³ et
ladite âme (12) est faite d'un matériau de type polyuréthane thermodurcissable compact.

2. Élément selon la revendication 1, dans lequel ledit matériau composite renforcé est un matériau de type polymère renforcé par des fibres.

3. Élément selon la revendication 2, dans lequel ledit matériau de type polymère est renforcé par de la fibre de carbone.

4. Élément selon l'une quelconque des revendications précédentes, dans lequel lesdites plaques de face (11, 12) ont des rapports de résistances compris dans l'intervalle de 0,1 à 0,25 MPa/kgm⁻³.

5. Élément selon l'une quelconque des revendications précédentes, dans lequel lesdites plaques de face (11, 12) ont des rapports de rigidité compris dans l'intervalle de 2 à 26 MPa/kgm⁻³.

6. Élément selon l'une quelconque des revendications précédentes, dans lequel lesdites plaques de face (11, 13) ont des épaisseurs comprises dans l'intervalle de 1 à 30 mm.

7. Élément selon l'une quelconque des revendications précédentes, dans lequel ladite âme (12) a une épaisseur comprise dans l'intervalle de 10 mm à 150 mm.

8. Élément selon l'une quelconque des revendications précédentes, dans lequel lesdites plaques de face (11, 13) et des parois latérales (34, 36) s'étendant entre lesdites plaques de face sont pultrudées d'un seul tenant.

9. Structure maritime, navire ou bateau ayant une coque construite à partir d'au moins un élément structurel de type plaque sandwich selon l'une quelconque des revendications précédentes.

10. Panneau de pont comprenant au moins un élément structurel de type plaque sandwich selon l'une quelconque des revendications 1 à 8.

11. Cuve de stockage comprenant au moins un élément structurel de type plaque sandwich selon l'une quelconque des revendications 1 à 8.

12. Procédé de fabrication d'un composant d'une structure comprenant les étapes consistant à :
fournir des première et deuxième plaques de face (11, 13) en relation espacée pour définir une cavité, lesdites première et deuxième plaques de face étant formées d'un matériau composite renforcé non métallique ; et
injecter un matériau plastique ou polymère (12) dans ladite cavité pour lier lesdites première et deuxième plaques de face entre elles avec une résistance suffisante pour transférer les forces de cisaillement entre elles ; dans lequel
lesdites plaques de face ont des rapports de résistances compris dans l'intervalle de 0,03 à 0,5 MPa/kgm⁻³ et des rapports de rigidité compris dans l'intervalle de 0,5 à 50 MPa/kgm⁻³ et
ladite âme (12) est faite d'un matériau de type polyuréthane thermodurcissable compact.

13. Procédé de construction d'une structure comprenant les étapes consistant à :
fabriquer une pluralité de composants structurels selon le procédé de la revendication 12 ; et
assembler lesdits composants structurels pour former ladite structure.

14. Procédé selon la revendication 13, dans lequel lesdites étapes de fabrication et d'assemblage sont exécutées sur des sites différents.

15. Procédé de renforcement d'une structure métallique existante (21) comprenant les étapes consistant à :
placer une couche de renforcement (24) sur ladite structure métallique (21) en relation espacée afin de former au moins une cavité entre les surfaces intérieures de ladite structure métallique et de ladite couche de renforcement ;
injecter un matériau dans ladite au moins une cavité pour former une couche intermédiaire (27) en polyuréthane compact ; et
faire durcir ledit matériau afin qu'il adhère auxdites surfaces intérieures de la structure métallique (21) et de la couche de renforcement (24) de manière à transférer les forces de cisaillement entre elles ; **caractérisé en ce que** :
ladite couche de renforcement est formée d'un matériau composite renforcé non métallique ou polymère renforcé ayant un rapport de résistances compris dans l'intervalle de 0,03 à 0,5 MPa/kgm⁻³ et un rapport de rigidité compris dans l'intervalle de 0,5 à 50 MPa/kgm⁻³.

16. Procédé selon la revendication 15, dans lequel ladite structure métallique existante est un panneau de métal (21) qui est supporté par des poutres, des poutrelles ou des plats à boudin (22, 23) et ladite couche de renforcement est agencée de telle manière qu'au moins une partie desdits poutres, poutrelles ou plats à boudin sont positionnés entre ledit panneau de métal et ladite couche de renforcement.

17. Procédé selon la revendication 16, dans lequel ladite couche de renforcement est courbée de telle façon que ladite couche de renforcement (24) est plus éloignée dudit panneau de métal au voisinage desdits poutres ou plats à boudin que dans les autres positions.

18. Procédé selon la revendication 15, 16 ou 17, dans lequel ladite structure métallique existante est un panneau de métal renforcé par au moins une poutrelle (28), dans lequel une couche de renforcement (24) est fournie de telle manière qu'un bord de celle-ci est relié à ladite poutrelle par un assemblage à recouvrement laminé (29).

19. Procédé selon l'une quelconque des revendications 12 à 18, dans lequel ladite structure est un bâtiment, un pont, un navire, un composant de navire ou une structure en mer.
